# EUROPÄISCHE PATENTSCHRIFT

(11) **EP 0 475 929 B1**
(45) Veröffentlichungstag und Bekanntmachung des Hinweises auf die Patenterteilung: **26.10.1994**
(21) Anmeldenummer: 91890158.8
(22) Anmeldetag: 18.07.1991
(51) Int. Cl.: B60C 11/00

(54) **Fahrzeugluftreifen**
Vehicle pneumatic tyre
Bandage pneumatique pour véhicules

(30) Priorität: 22.08.1990 AT 1726/90
(43) Veröffentlichungstag der Anmeldung: 18.03.1992
(73) Patentinhaber: Semperit Reifen Aktiengesellschaft, A-2514 Traiskirchen (AT)
(72) Erfinder: Angerer, Karl, Dipl.-Ing., A-7212 Forchtenstein (AT)

(56) Entgegenhaltungen:
- DE-A- 3 445 041
- PATENT ABSTRACTS OF JAPAN vol. 14, no. 147 (M-952)(4090)20. März 1990 & JP-A-2 011 404
- PATENT ABSTRACTS OF JAPAN vol. 12, no. 311 (M-734)(3158)24. August 1988 & JP-A-63 082 806
- PATENT ABSTRACTS OF JAPAN vol. 12, no. 374 (M-749)(3221)6. Oktober 1988 & JP-A-63 125 411

## Beschreibung

Die Erfindung betrifft einen Fahrzeugluftreifen mit einem Laufflächenprofil, welches über die Laufflächenbreite zumindest fünf Reihen aus in Umfangsrichtung aufeinanderfolgenden, innerhalb jeder Reihe jeweils gleichartigen Profilabschnitten aufweist, wobei die Profilabschnitte in den Schulterbereichen mindestens zwei unterschiedliche Basislängen aufweisen.

Zur Verringerung des Abrollgeräusches von Reifen ist es üblich, den über den Reifenumfang aufeinanderfolgenden Profilabschnitten unterschiedliche Umfangslängen zuzuordnen. Dabei werden beispielsweise drei oder fünf unterschiedliche Umfangslängen für die ansonsten gleichartig gestalteten Profilelemente gewählt und rechnerisch mittels Fourier-Analyse eine Abfolge über den Reifenumfang ermittelt, die geräuschmäßig besonders günstig ist. Dazu ist schon eine Vielzahl von Maßnahmen, auch in der Patentliteratur, vorgeschlagen worden. Es wird beispielsweise auf die US-PS 4,327.792 und die US-PS 4,598.748 verwiesen, wo optimierte Profilelementabfolgen vorgeschlagen sind, die es vor allem gestatten, die Amplitude der Grundwelle zu senken und die auftretenden Frequenzen auf ein breiteres Frequenzband zu verteilen. Aus der DE-OS 34 45 041 ist es weiters bekannt, im Bereich der Laufflächenprofilränder die Umfangslängenänderungen aufeinanderfolgende Profilelemente kleiner zu halten als im Vergleich zu den im Laufflächenmittelbereich befindlichen Profilelementen. Diese Maßnahme soll sich zusätzlich günstig auf ein gleichförmiges Abriebsbild auswirken.

Bei Maßnahmen, die insbesondere mit dem Ziel einer objektiven und/oder subjektiven Beeinflussung des Abrollgeräusches einhergehen, ist es nun wichtig, auch auf die weiteren Reifeneigenschaften, wie Aquaplaningverhalten, Ansprechverhalten auf Lenkkräfte, Hochgeschwindigkeitstauglichkeit usw. zu achten.

Die Erfindung hat sich nun die Aufgabe gestellt, für das eingangs erwähnte Laufflächenprofil eine weitere Maßnahme zur Erzielung einer zumindest subjektiv geringeren bzw. angenehmeren Geräuschentwicklung beim Abrollen zu setzen.

Gelöst wird die gestellte Aufgabe erfindungsgemäß dadurch, daß zur Laufflächenmitte zu die Anzahl der in den einzelnen Reihen den Basislängen der Schulterreihen zugeordneten Profilabschnitte schrittweise größer ist.

Bei einem erfindungsgemäß gestalteten Laufflächenprofil steigt demmach in den einzelnen Reihen zur Laufflächenmitte zu die Gesamtanzahl der über den Umfang vorgesehenen Profilabschnitte. Diese Maßnahme bewirkt eine Verbreiterung bzw. Aufsplittung des Frequenzspektrums des Profilaufschlaggeräusches, was zur subjektiven Geräuschverbesserung merklich beiträgt.

Besonders vorteilhafte Ausgestaltungen der Erfindung sind in den Unteransprüchen enthalten.

Weitere Merkmale, Vorteile und Einzelheiten der Erfindung werden nun anhand der Zeichnung, die zwei Ausführungsbeispiele darstellt, näher beschrieben. Dabei ist in den beiden Zeichnungsfiguren jeweils eine Draufsicht auf eine Teilabwicklung des Laufflächenprofiles eines Fahrzeugreifens dargestellt.

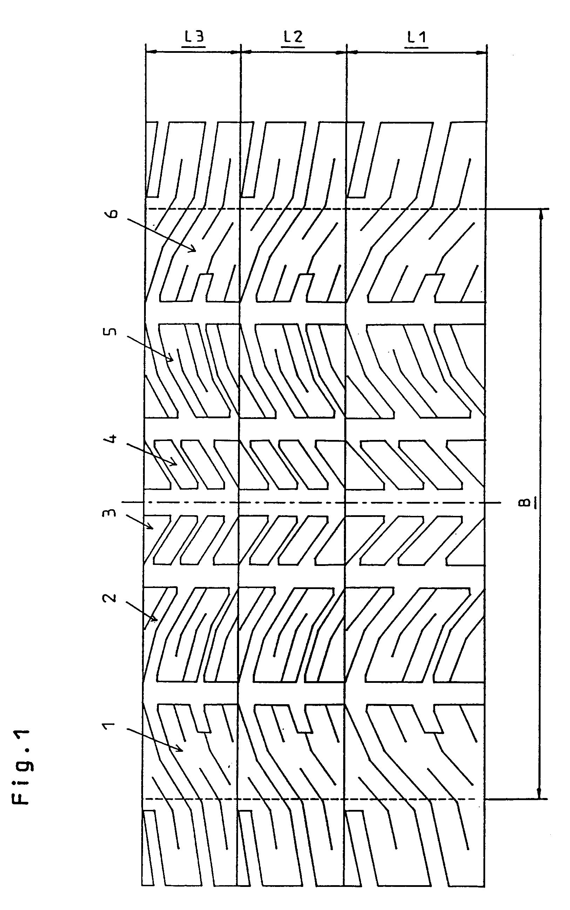

Das Laufflächenprofil gemäß Fig. 1 setzt sich aus sechs in Umfangsrichtung verlaufenden Reihen 1, 2, 3, 4, 5, 6 mit innerhalb jeder Reihe jeweils gleichartigen Profilabschnitten zusammen. Die Profilabschnitte sind im vorliegenden Ausführungsbeispiel durch Quernuten voneinander getrennte Blöcke gebildet, so daß sich das Laufflächenprofil aus sechs Blockreihen zusammensetzt. Mit B ist die Breite des Laufflächenprofiles in der Bodenaufstandsfläche unter normaler Last und normalem Druck bezeichnet.

Jede Reihe 1, 2, 3, 4, 5 und 6 setzt sich somit aus in Umfangsrichtung aneinanäergereihten gleichartigen Profilabschnitten zusammen. In den den Laufflächenrändern zugeordneten Reihen 1 und 6 sind Profilabschnitte mit drei unterschiedlichen Basislängen L₁, L₂, L₃ vorgesehen. Die Reihen 1 und 6 setzen sich demnach über den Reifenumfang aus einer Aufeinanderfolge dieser Profilabschnitte mit drei unterschiedlichen Umfangslängen L₁, L₂, L₃ zusammen, deren günstigste Anordnung, wie es heute generell üblich ist und im Stand der Technik vielfach beschrieben ist, rechnerisch ermittelt wird. Nach der Erfindung sind in den Mittelreihen 2 und 5 innerhalb der Basislängen L₁, L₂ und L₃ jeweils zwei gleichartige Profilabschnitte enthalten, in den Zentralreihen 3 und 4 jeweils drei gleichartige Profilabschnitte.

Bevorzugt wird dabei darauf geachtet, daß innerhalb der Profilquerstreifen (über die gesamte Breite B betrachtet) mit den Basislängen L₁, L₂ und L₃ jeweils übereinstimmende Fahrflächenanteile (%-Anteil der mit dem Boden in Berührung kommenden Blockoberfläche im Verhältnis zur Gesamtfläche) vorliegen. In entsprechender Weise werden demnach die Quernutbreiten und/oder Blockoberflächen in den einzelnen Reihen 1 bis 6 variiert.

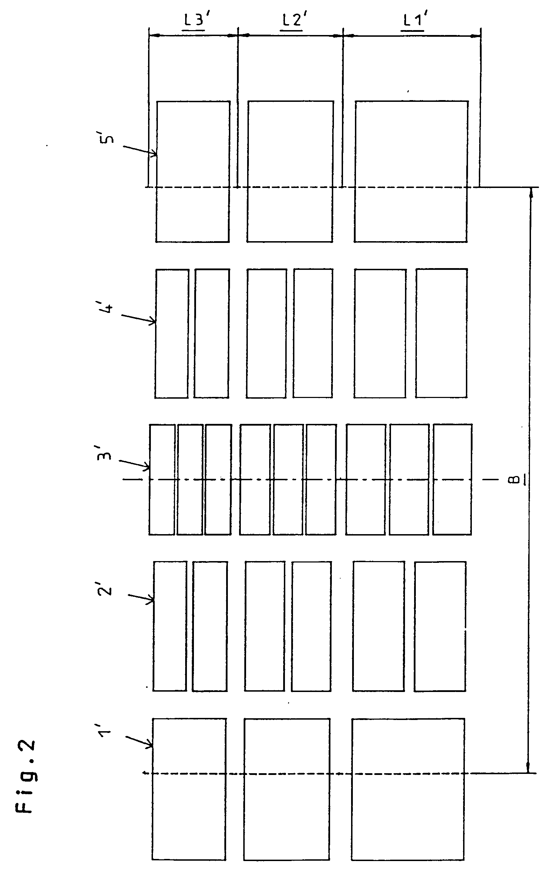

Beim zweiten Ausführungsbeispiel gemäß Fig. 2 sind fünf Reihen 1′, 2′, 3′ 4′, 5′, die hier ebenfalls als Blockreihen ausgestaltet sind, vorgesehen, von welchen eine als Zentralreihe 3′ entlang der Mittelumfangslinie M-M verläuft. Auch bei diesem Ausführungsbeispiel sind den Basislängen L₁′, L₂′ und L₃′, die am Laufflächenrand definiert werden, in den Schulterreihen 1′ und 5′ jeweils ein Profilabschnitt in den Mittelreihen 2′ und 4′ jeweils zwei Profilabschnitte und in der Zentralreihe 3′ jeweils drei Profilabschnitte zugeordnet.

Die Anzahl unterschiedlicher Basislängen beträgt mindestens zwei, bevorzugt drei oder fünf. Das Laufflächenprofil könnte sich jedoch auch aus einer Aufeinanderfolge von Profilabschnitten zusammensetzen, die sämtlich unterschiedliche Umfangslängen aufweisen. In diesem Fall wäre die Gesamtzahl der über den Laufflächenumfang vorhandenen Profilabschnitte gleich der Anzahl der unterschiedlichen Basislängen.

## Patentansprüche

1. Fahrzeugluftreifen mit einem Laufflächenprofil, welches über die Laufflächenbreite zumindest fünf Reihen aus in Umfangsrichtung aufeinanderfolgenden, innerhalb jeder Reihe jeweils gleichartigen Profilabschnitten aufweist, wobei die Profilabschnitte in den Schulterreihen mindetens zwei unterschiedliche Basislängen (L₁, L₂, L₃) aufweisen, dadurch gekennzeichnet, daß zur Laufflächenmitte zu die Anzahl der in den einzelnen Reihen (1 bis 6, 1′ bis 5′) den Basislängen der Schulterreihen (1, 6; 1′, 5′) zugeordneten Profilabschnitte schrittweise größer ist.

2. Fahrzeugluftreifen nach Anspruch 1, welcher fünf oder sechs Reihen mit jeweils aufeinanderfolgenden Profilabschnitten aufweist, dadurch gekennzeichnet, daß in der Zentralreihe (3′) bzw. den beiden Zentralreihen (3, 4) im Laufflächenmittelbereich jeder Basislänge drei Profilabschnitte und in den Mittelreihen (2, 5′, 2′, 4′) jeder Basislänge zwei Profilabschnitte zugeordnet sind.

3. Fahrzeugluftreifen nach Anspruch 1 oder 2, dadurch gekennzeichnet, daß die Reihen (1 bis 6, 1′ bis 5′) zumindest zum Teil Blockreihen sind.

4. Fahrzeugluftreifen nach einem der Ansprüche 1 bis 3, dadurch gekennzeichnet, daß in den über die Laufflächenbreite (B) verlaufenden Profilquerstreifen unterschiedlicher Umfangslängen bzw. Basislängen der Fahrflächenanteil jeweils gleich groß ist.

5. Fahrzeugluftreifen nach einem der Ansprüche 1 bis 4, dadurch gekennzeichnet, daß sich die Schulterreihen (1, 6; 1′, 5′) aus Profilabschnitten mit drei unterschiedlichen Basislängen (L₁, L₂, L₃) zusammensetzen.

6. Fahrzeugluftreifen nach einem der Ansprüche 1 bis 4, dadurch gekennzeichnet, daß sich die Schulterreihen aus Profilabschnitten mit fünf unterschiedlichen Basislängen zusammensetzen.

## Claims

1. Pneumatic vehicle tyre, having a tread surface profile which comprises, over the tread surface width, at least five rows of profile portions, which follow one another when viewed with respect to the circumferential direction and are similar within each row, the profile portions in the shoulder rows having at least two different base lengths (L₁, L₂, L₃), characterised in that the number of profile portions associated with the base lengths of the shoulder rows (1, 6; 1', 5') in the individual rows (1 to 6, 1' to 5') is stepwisely greater towards the tread surface centre.

2. Pneumatic vehicle tyre according to claim 1, which comprises five or six rows each having successive profile portions, characterised in that three profile portions are associated with each base length in the central row (3') or respectively in the two central rows (3, 4) in the central region of the tread surface, and two profile portions are associated with each base length in the central rows (2, 5', 2', 4').

3. Pneumatic vehicle tyre according to claim 1 or 2, characterised in that at least some of the rows (1 to 6, 1' to 5') are rows of blocks.

4. Pneumatic vehicle tyre according to one of claims 1 to 3, characterised in that each travel surface portion has identical dimensions in the transverse profile strips of different circumferential lengths or respectively base lengths, which strips extend over the tread surface width (B).

5. Pneumatic vehicle tyre according to one of claims 1 to 4, characterised in that the shoulder rows (1, 6; 1', 5') comprise profile portions having three different base lengths (L₁, L₂, L₃).

6. Pneumatic vehicle tyre according to one of claims 1 to 4, characterised in that the shoulder rows comprise profile portions having five different base lengths.

## Revendications

1. Pneumatique pour véhicules comportant un profil de chape, qui présente sur la largeur de chape au moins cinq séries de sections de profil identiques consécutif dans la direction périphérique et à l'intérieur de chaque série, les sections de profil présentant dans les séries d'épaulement au moins deux longueurs de base différentes (L₁, L₂, L₃), caractérisé en ce que vers le milieu de la chape le nombre de sections de profil affecté dans les différentes séries (1 à 6, 1' à 5') aux longueurs de base des séries d'épaulement (1, 6 ; 1', 5') augmente pas à pas.

2. Pneumatique pour véhicules selon la revendication 1, qui présente cinq ou six séries avec respectivement des sections de profil consécutives, caractérisé en ce que dans la série centrale (3') ou dans les deux séries centrales (3, 4) dans la zone médiane de la chape de chaque longueur de base sont affectées trois sections de profil et dans les séries médianes (2, 5', 2', 4') de chaque longueur de base sont affectées deux sections de profil.

3. Pneumatique pour véhicules selon la revendication 1 ou 2, caractérisé en ce que les séries (1 à 6, 1' à 5') sont au moins en partie des séries de blocs.

4. Pneumatique pour véhicules selon l'une des revendications 1 à 3, caractérisé en ce que la portion de surface de roulement dans les bandes transversales de profil s'étendant dans la largeur de la chape (B) de différentes longueurs périphériques ou de longueurs de base, est respectivement de même grandeur.

5. Pneumatique pour véhicules selon l'une des revendications 1 à 4, caractérisé en ce que les séries d'épaulement (1, 6 ; 1', 5') sont composées de sections de profil ayant trois longueurs de base différentes (L₁, L₂, L₃).

6. Pneumatique pour véhicules selon' l'une des revendications 1 à 4, caractérisé en ce que les séries d'épaulement sont constituées par des sections de profil ayant cinq longueurs de base différentes.
